# EUROPEAN PATENT APPLICATION

(11) **EP 2 941 082 A1**
(43) Date of publication of application: **04.11.2015**
(21) Application number: 12891198.9
(22) Date of filing: 31.12.2012
(51) Int. Cl.: H04W 76/00, H04W 76/02

(54) **METHOD, DEVICE AND SYSTEM FOR RESTORING CONNECTION FAILURE**

(71) Applicant: FUJITSU LIMITED, Kawasaki-shi Kanagawa 211-8588 (JP)
(72) Inventor: LI, Zhaojun, Beijing 100025 (CN); WANG, Weiwei, Beijing 100025 (CN)
(74) Representative: Wilding, Frances Ward
(86) International application number: PCT/CN2012/088007
(87) International publication number: WO 2014/101171

(57) **Abstract**

A connection failure recovery method and apparatus and a system. The method includes: performing cell selection once or more by terminal equipment when connection reestablishment failure occurs in the terminal equipment during a connection reestablishment procedure. After each time of cell selection, a subsequent connection reestablishment procedure is performed in a selected cell. With the embodiments of the disclosure, the terminal equipment is enabled to have more opportunities to perform connection reestablishment procedures, thereby keeping the existing connection, avoiding breaking away from a connected state, and alleviating effect on the service quality of the terminal equipment and quality of experience of users.

## Description

### Technical Field

The present invention relates to the field of communications, and in particular to a connection failure recovery method and apparatus and a system.

### Background

Based on existing 3GPP standards, terminal equipment in a radio resource control (RRC) connected (RRC-connected) state will initiate an RRC link reestablishment procedure after a failure (such as a radio link failure (RLF), a mobile handover failure (HOF), and an RRC link reconfiguration failure, etc.) occurs, so as to keep and continue existing RRC link.

However, in the implementation of the present invention, the inventors found that in an existing connection reestablishment mechanism, a "cell selection" procedure is permitted to be performed only once, until a suitable cell is selected. If any failure occurs or a selected cell becomes unsuitable any longer during this procedure, the terminal will break away from the RRC-connected state. Therefore, an access stratum (AS) fast failure recovery procedure is no longer performed, thereby seriously affecting service quality of the terminal and quality of experience (QoE)of users.

It should be noted that the above description of the background is merely provided for clear and complete explanation of the present invention and for easy understanding by those skilled in the art. And it should not be understood that the above technical solution is known to those skilled in the art as it is described in the background art of the present invention.

### Summary

An object of embodiments of the present invention is to provide a connection failure recovery method and apparatus and a system. When a connection reestablishment failure occurs in the terminal equipment, the terminal equipment may be avoided from breaking away from a connected state, and effect on the service quality of the terminal equipment and quality of experience of users may be alleviated.

According to a first aspect of the embodiments of the present invention, there is provided a connection failure recovery method, including: performing cell selection once or more by terminal equipment when connection reestablishment failure occurs in the terminal equipment during a connection reestablishment procedure.

According to a second aspect of the embodiments of the present invention, there is provided a connection failure recovery method, including: configuring terminal equipment with indication information, the indication information being used to indicate that the terminal equipment is capable of performing cell selection once or more when connection reestablishment failure occurs during a connection reestablishment procedure; and notifying the indication information to the terminal equipment.

According to a third aspect of the embodiments of the present invention, there is provided a connection failure recovery method, including: receiving information on performing cell selection once or more transmitted by terminal equipment, and/or number of times of performing cell selection, and/or identification information of a cell selected each time, when connection reestablishment failure occurs in the terminal equipment during a connection reestablishment procedure.

According to a four aspect of the embodiments of the present invention, there is provided a connection failure recovery method, including: receiving indication information configured for terminal equipment and transmitted by an eNB of a cell to which the terminal equipment belongs, and/or information on whether the terminal equipment is willing to perform cell selection once or more in case of occurrence of connection reestablishment failure during a connection reestablishment procedure, when handover occurs in the terminal equipment, the indication information being used to indicate that the terminal equipment is capable of performing cell selection once or more when connection reestablishment failure occurs during a connection reestablishment procedure.

According to a fifth aspect of the embodiments of the present invention, there is provided a connection failure recovery method, including: receiving, by a target eNB to which terminal equipment tries to reestablish a connection, a reestablishment request message transmitted by the terminal equipment; and feeding a connection reestablishment rejection message back to the terminal equipment and transmitting a cell list to the terminal equipment, so that the terminal equipment performs cell selection once or more according to the cell list; wherein the cell list includes cells that contain context of the terminal equipment and are under control of the target eNB of the connection reestablishment.

According to a sixth aspect of the embodiments of the present invention, there is provided a connection failure recovery apparatus, including:
a cell selection unit configured to perform cell selection once or more when connection reestablishment failure occurs in terminal equipment during a connection reestablishment procedure.

According to a seventh aspect of the embodiments of the present invention, there is provided a connection failure recovery apparatus, including:
an information configuration unit configured to configure terminal equipment with indication information, the indication information being used to indicate that the terminal equipment is capable of performing cell selection once or more when connection reestablishment failure occurs in the terminal equipment during a connection reestablishment procedure; and
a first notification unit configured to notify the indication information to the terminal equipment.

According to an eighth aspect of the embodiments of the present invention, there is provided a connection failure recovery apparatus, including:
a fifth receiving unit configured to receive information on performing cell selection once or more by terminal equipment, and/or number of times of performing cell selection, and/or identification information of a cell selected each time, when connection reestablishment failure occurs in the terminal equipment during a connection reestablishment procedure.

According to a ninth aspect of the embodiments of the present invention, there is provided a connection failure recovery apparatus, including:
a sixth receiving unit configured to receive indication information configured for terminal equipment and transmitted by an eNB of a cell to which the terminal equipment belongs, and/or information on whether the terminal equipment is willing to perform cell selection once or more in case of occurrence of connection reestablishment failure during a connection reestablishment procedure, when handover occurs in the terminal equipment, the indication information being used to indicate that the terminal equipment is capable of performing cell selection once or more when connection reestablishment failure occurs during a connection reestablishment procedure.

According to a tenth aspect of the embodiments of the present invention, there is provided a connection failure recovery apparatus, including:
an eighth receiving unit configured to receive a reestablishment request message transmitted by terminal equipment; and
a fifth transmission unit configured to feed a connection reestablishment rejection message back to the terminal equipment and transmit a cell list to the terminal equipment, so that the terminal equipment performs cell selection once or more according to the cell list; wherein the cell list includes cells that contain context of the terminal equipment and are under control of the target eNB of the connection reestablishment.

According to an eleventh aspect of the embodiments of the present invention, there is provided terminal equipment, including the apparatus of the sixth aspect.

According to a twelfth aspect of the embodiments of the present invention, there is provided an eNB, including the apparatus of the seventh aspect.

According to a thirteenth aspect of the embodiments of the present invention, there is provided an eNB, including the apparatus of the eighth aspect.

According to a fourteenth aspect of the embodiments of the present invention, there is provided an eNB, including the apparatus of the ninth aspect, or including the apparatus of the tenth aspect.

According to a fifteenth aspect of the embodiments of the present invention, there is provided a network system, including the terminal equipment of the eleventh aspect.

According to a sixteenth aspect of the embodiments of the present invention, there is provided a computer-readable program, wherein when the program is executed in a connection failure recovery apparatus or terminal equipment, the program enables a computer to carry out the connection failure recovery method as described in the first aspect in the connection failure recovery apparatus or the terminal equipment.

According to a seventeenth aspect of the embodiments of the present invention, there is provided a storage medium in which a computer-readable program is stored, wherein the computer-readable program enables a computer to carry out the connection failure recovery method as described in the first aspect in a connection failure recovery apparatus or terminal equipment.

According to a eighteenth aspect of the embodiments of the present invention, there is provided a computer-readable program, wherein when the program is executed in a connection failure recovery apparatus or an eNB, the program enables a computer to carry out the connection failure recovery method as described in the second aspect in the connection failure recovery apparatus or the eNB.

According to a fourteenth aspect of the embodiments of the present invention, there is provided a storage medium in which a computer-readable program is stored, wherein the computer-readable program enables a computer to carry out the connection failure recovery method as described in the second aspect in a connection failure recovery apparatus or an eNB.

An advantage of the embodiments of the present invention exists in that when a connection reestablishment failure occurs in the terminal equipment, the terminal equipment may perform a cell selection procedure once or more, and perform corresponding connection reestablishment, thereby avoiding the terminal equipment from being broken away from a connected state, and alleviating effect on the service quality of the terminal equipment and quality of experience of users.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

The foregoing and other objects, features and advantages of the embodiments of the present invention shall become more apparent with reference to the drawings and the following description. In the drawings:
Figure 1 is a connection failure recovery method of Embodiment 1 of the present invention;
Figure 2 is a flowchart of a connection failure recovery method of Embodiment 2 of the present invention;
Figure 3 is a flowchart of a connection failure recovery method of Embodiment 3 of the present invention;
Figure 4 is a flowchart of a connection failure recovery method of Embodiment 4 of the present invention;
Figure 5 is a flowchart of a connection failure recovery method of Embodiment 5 of the present invention;
Figure 6 is a flowchart of a connection failure recovery method of Embodiment 7 of the present invention;
Figure 7 is a flowchart of a connection failure recovery method of Embodiment 8 of the present invention;
Figure 8 is a flowchart of a connection failure recovery method of Embodiment 9 of the present invention;
Figure 9 is a schematic diagram of the structure of a connection failure recovery apparatus of Embodiment 10 of the present invention;
Figure 10 is a schematic diagram of the structure of a connection failure recovery apparatus of Embodiment 11 of the present invention;
Figure 11 is a connection failure recovery apparatus of Embodiment 14 of the present invention;
Figure 12 is a schematic diagram of the structure of a connection failure recovery apparatus of Embodiment 16 of the present invention;
Figure 13 is a schematic diagram of the structure of a connection failure recovery apparatus of Embodiment 18 of the present invention; and
Figure 14 is a schematic diagram of the structure of a connection failure recovery apparatus of Embodiment 20 of the present invention.

### Detailed Description

Various embodiments of the present invention shall be described below with reference to the accompanying drawings. These embodiments are illustrative only, and are not intended to limit the present invention.

In an existing mechanism, after occurrence of a failure (such as a radio link failure, a mobile handover failure, and an RRC link reconfiguration failure, etc.), terminal equipment keeps and continues existing radio resource control (RRC) connection via an RRC connection reestablishment procedure. Currently, the RRC connection reestablishment procedure is as described in TS36.331 v11.1.0, which is incorporated herein. The RRC connection reestablishment procedure shall be briefly described below. First, cell selection is performed: after a suitable cell selected, a signaling flow of RRC connection reestablishment request, such as performing random access, then transmitting an RRC connection reestablishment request message, and waiting for an RRC connection reestablishment message or an RRC connection reestablishment rejection message; and when the RRC connection reestablishment message being received, the terminal equipment responding an RRC connection completion message, is performed in the selected cell.

However, in an practical system (especially in a "pico cell" scenario), due to various reasons, the RRC connection reestablishment procedure possibly fails, thereby resulting in that the terminal equipment breaks away from an RRC-connected state, and furthermore, seriously affecting the service quality of the terminal equipment and quality of experience (QoE) of users.

Hence, the embodiments of the present invention provide a connection failure recovery method and apparatus and a system, so as to solve the above problem. The connection failure recovery method of the embodiments of the present invention shall be described below with reference to the accompanying drawings; for example the description is given taking that a connection reestablishment procedure is an RRC connection reestablishment procedure as an example.

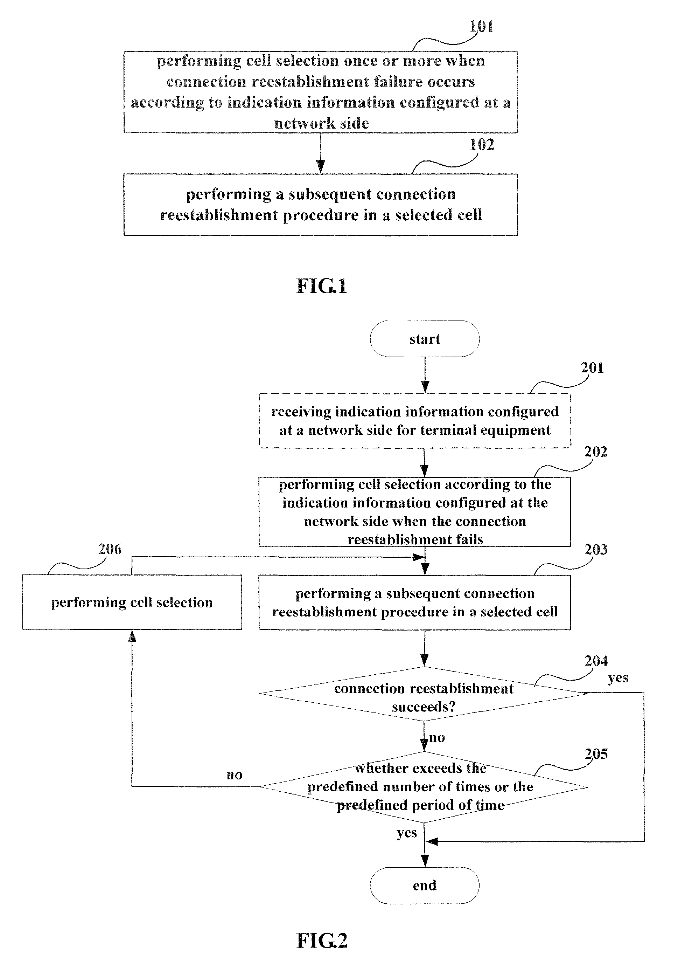

Fig. 1 is a connection failure recovery method of Embodiment 1 of the present invention. At a terminal equipment side, as shown in Fig. 1, the method includes:
step 101: performing cell selection once or more by terminal equipment when connection reestablishment failure occurs in the terminal equipment during a connection reestablishment procedure;
in this embodiment, for an RRC connection reestablishment procedure, the connection reestablishment failure may include the following cases:
   1) in the connection reestablishment procedure, the selected cell becomes no longer suitable, or random access failure occurs, or no suitable cell is selected within a specified time (that is, no suitable cell is selected when T311 expires), or no RRC connection reestablishment message is received within a specified time (that is, no RRC connection reestablishment message is received when T301 expires), which results in that the connection reestablishment fails; and 2) connection reestablishment failure resulted from rejection of a reestablishment request;
      when the above cases occur, the terminal equipment may perform cell selection once or more; in this way, the terminal equipment may have many opportunities to perform connection reestablishment procedures, thereby solving the problem present in an existing mechanism;
step 102: performing a subsequent connection reestablishment procedure in a selected cell after each time of cell selection in a procedure of one or more times of cell selection (that is, the procedure performed after a suitable cell is selected in the connection reestablishment procedure);
   for example, after each time of cell selection, the subsequent connection reestablishment procedure is performed in the selected cell, connection reestablishment signaling after the cell selection being similar to that in the prior art, and being not going to be described herein any further.

It can be seen that when the connection reestablishment fails, the terminal equipment may further perform one or more times of cell selection procedures, and perform corresponding connection reestablishment, thereby avoiding the terminal equipment from being broken away from a connected state, and alleviating effect on the service quality of the terminal equipment and quality of experience of users.

Following description is given with reference to the accompanying drawings taking that the RRC connection reestablishment failure is: 1) the selected cell becoming no longer suitable, or random access failure, or no suitable cell being selected within a specified time, or no RRC connection reestablishment message being received within a specified time; and 2) a reestablishment request being rejected, as examples.

Fig. 2 is a flowchart of a connection failure recovery method of Embodiment 2 of the present invention. This method is applicable to all cases of connection reestablishment failures. And for an RRC connection reestablishment failure, it is applicable to the above two cases of connection reestablishment failures. As shown in Fig. 2, the method includes:
step 201: receiving indication information configured at a network side for terminal equipment;
in this embodiment, the network side may be an eNB to which the terminal equipment belongs before a failure (such as a radio link failure, a mobile handover failure, and an RRC link reconfiguration failure, etc.) occurs in the terminal equipment; for example, when a mobile handover failure occurs, an eNB at the network side may be a source eNB;
the indication information is used to indicate that the terminal equipment is capable of performing cell selection once or more when a connection reestablishment failure occurs in the connection reestablishment procedure; for example, it indicates that the terminal equipment performs cell selection once or more within a predefined period of time, or performs a predefined number of times of cell selection;
in this embodiment, the eNB may configure the predefined period of time and/or the predefined number of times; hence, the predefined period of time and/or the predefined number of times may also be notified to the terminal equipment by containing the predefined period of time and/or the predefined number of times in the indication information; furthermore, the predefined period of time and/or the predefined number of times may be transmitted via other messages;
furthermore, the predefined period of time and/or the predefined number of times may also be configured by the terminal equipment;
in a case where the predefined period of time and the predefined number of times are configured at the same time, the terminal equipment may perform the cell selection by select one of the predefined period of time and the predefined number of times according to predefined manners;
step 202: performing cell selection by the terminal equipment according to the indication information configured at the network side when the connection reestablishment fails;
in an existing mechanism, when the connection reestablishment fails, the terminal equipment will break away from the connected state; however, in this embodiment, the terminal equipment may perform cell selection once or more according to the indication information;
for example, the terminal equipment may perform cell selection once or more within the predefined period of time, or perform the predefined number of times of cell selection, according to the indication information;
in step 202, cell selection is first performed once;
step 203: performing a subsequent connection reestablishment procedure in a selected cell;
step 204: determining that the connection reestablishment succeeds or fails; a connection failure is recovered when the connection reestablishment succeeds, and the procedure is terminated; otherwise, step 205 is executed;
step 205: further determining whether the number of times of performing the cell selection exceeds the predefined number of times, or whether the period of time exceeds the predefined period of time, after the connection reestablishment fails in step 204; when a result of judgment is yes, the procedure is terminated, and when the a result of judgment is no, step 206 is executed;
for example, the terminal equipment may be provided with a timer or a counter, and the timer or the counter is started when connection reestablishment failure occurs;
step 206: performing cell selection by the terminal equipment again when the predefined period of time or the predefine number of times is not exceeded in step 205, then executing the subsequent step 203, and so on, until the connection is reestablished.

It can be seen from the above embodiment that when the connection reestablishment fails, the terminal equipment may perform cell selection once or more within the predefined period of time, or perform the predefined number of times of cell selection, thereby avoiding the terminal equipment from being broken away from a connected state, and alleviating effect on the service quality of the terminal equipment and quality of experience of users.

In the above steps, step 201 is optional, and in a case where the terminal equipment receives and stores the indication information, step 201 may be omitted.

Furthermore, in this embodiment, the method further includes: starting to time or count by the terminal equipment when the connection reestablishment fails. In this way, the terminal equipment may perform a cell selection procedure once or more before the timer expires or the counter reaches a maximum value.

In this embodiment, after performing the cell selection once or more, the method further includes: reporting that cell selection is performed once or more, and/or number of times of performing cell selection, and/or identification information of a cell selected each time, to an eNB of the selected cell.

The above information on performing cell selection once or more, and/or number of times of performing cell selection, and/or identification information of a cell selected each time, reported to an eNB of the selected cell, may be reported to the eNB via an RRC reestablishment request message, and may also be reported via other messages. In this way, the eNB of the selected cell may keep context of the terminal equipment (UE context) in a certain period of time; furthermore, the above information reported by the terminal equipment may be applied to a performance optimizing mechanism related to a self-optimizing network (SON); for example, the network side may adjust handover parameters according to the above information reported by the terminal equipment; for instance, after the terminal equipment reports that cell selection is performed by it multiple times, the network side may adjust handover parameters from source cell to each selected cell.

In this embodiment, before receiving the indication information by the terminal equipment in step 201, the method further includes:
transmitting information to the network side on whether the terminal equipment is willing to perform cell selection once or more. In this way, the network side, i.e. the eNB to which the terminal equipment belongs when a failure (a radio link failure, a mobile handover failure, and an RRC link reconfiguration failure) occurs, is made to determine to keep the context of the terminal equipment within a certain period of time according to the information, and/or the network side is made to transmit the indication information in step 201 to the terminal equipment according to the information.

Furthermore, the step of transmission of the information on whether the terminal equipment is willing to perform cell selection once or more to the network side is not limited to be performed before step 201, and may also be performed at any time after step 201. In this way, the network side is made to determine to keep the context of the terminal equipment within a certain period of time according to the information.

It can be seen from the above embodiment that when the connection reestablishment fails, for example, the selected cell becomes no longer suitable, or a random access procedure fails, or no suitable cell is selected within a specified period of time, or no RRC connection reestablishment message is received within a specified period of time, the terminal equipment may perform a cell selection procedure once or more according to the predefined indication information, thereby avoiding the terminal equipment from being broken away from a connected state, and alleviating effect on the service quality of the terminal equipment and quality of experience of users.

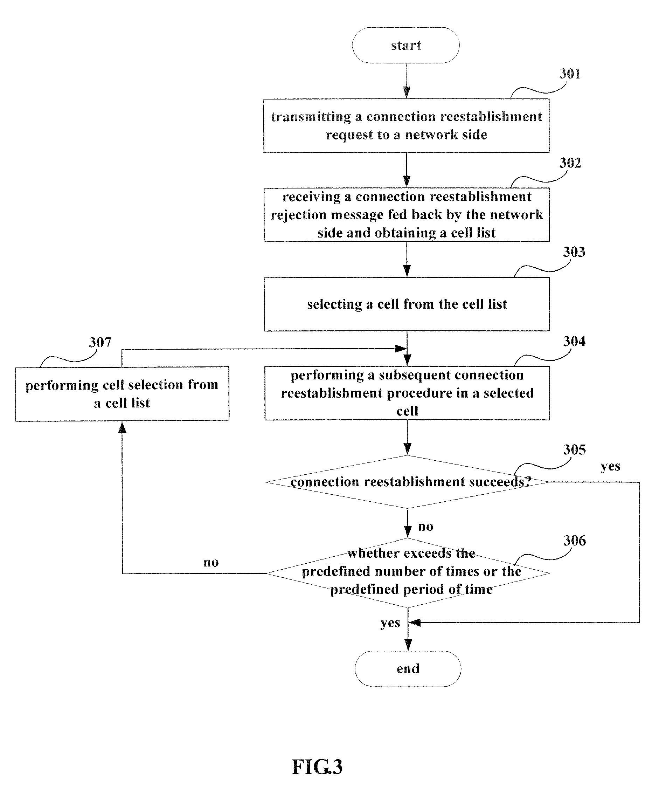

Fig. 3 is a flowchart of a connection failure recovery method of Embodiment 3 of the present invention. The description is given taking a connection reestablishment failure resulted from rejection of an RRC reestablishment request in an RRC connection reestablishment procedure as an example.

As shown in Fig. 3, the method includes:
step 301: transmitting a connection reestablishment request by terminal equipment to a network side in a connection reestablishment procedure;
in this embodiment, the terminal equipment transmits the connection reestablishment request to an eNB of a cell selected in the cell selection procedure; for example, the connection reestablishment request may be an RRC connection reestablishment request;
step 302: receiving a connection reestablishment rejection message fed back by the network side and obtaining a cell list;
in this embodiment, after receiving the connection reestablishment request, the network side may accept or reject the request; and when it rejects the request, it transmits the connection reestablishment rejection message to the terminal equipment; in this way, the terminal equipment receives the connection reestablishment rejection message fed back by the eNB of the selected cell, and the connection reestablishment rejection message may be an RRC connection reestablishment rejection message;
the cell list may be contained in the connection reestablishment rejection message, so that the terminal equipment may obtain the cell list; wherein the cell list includes cells that contain context of the terminal equipment and are under control of the eNB of the selected cell, which correspond to the cells indicated by additionalReestabinfoList in AS-Context (access stratum context) (see TS36.331 v11.1.0, 10.3, which is incorporated herein); furthermore, for further optimization, the cell list may further include cells that contain the context of the terminal equipment and are under control of other eNBs; in this way, the connection reestablishment rejection message contains all prepared cells (that is, an eNB controlling the cells possesses the context of the terminal equipment), so as to assist the terminal equipment in finding suitable cells and reestablishing connection successfully again;
in this embodiment, the connection reestablishment rejection message may further contain a predefined period of time or a predefine number of times for performing cell selection once or more; in this case, the predefined period of time or the predefine number of times is set by the eNB of the selected cell; furthermore, the predefined period of time or the predefine number of times is configured by the terminal equipment (not needing to be configured via signaling);
in this embodiment, the cell list may also be transmitted via other messages, without being limited to a connection reestablishment rejection message;
step 303: selecting a cell by the terminal equipment from the cell list;
steps 304-306 are similar to steps 303 and 305 in Embodiment 2, and shall not be described herein any further; and in step 307, cell selection is performed again when a result of judgment in step 306 is no, that is, selecting a cell from the cell list.

It can be seen from the above embodiment that when the connection reestablishment fails, for example, the connection reestablishment request is rejected, the terminal equipment may perform a cell selection procedure once or more according to the cell list fed back by the network side, thereby avoiding the terminal equipment from being broken away from a connected state, and alleviating effect on the service quality of the terminal equipment and quality of experience of users.

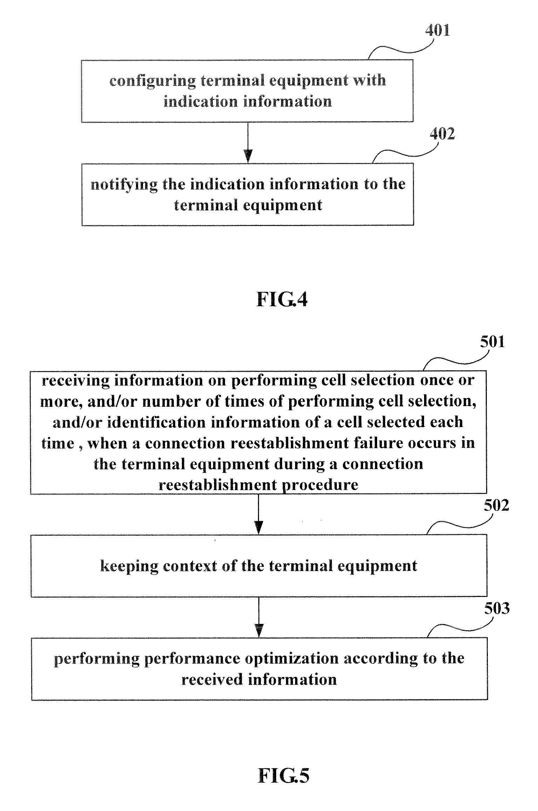

Fig. 4 is a flowchart of a connection failure recovery method of Embodiment 4 of the present invention, which is addressed to all cases of connection reestablishment failures, such as the cases of connection reestablishment failures listed in items 1) and 2) above in an RRC connection reestablishment procedure, which are at an eNB side to which the terminal equipment belongs before a failure (such as a radio link failure, a mobile handover failure, and an RRC link reconfiguration failure, etc.) occurs (the eNB in a mobile handover failure is a source eNB side when mobile handover occurs).

As shown in Fig. 4, the method includes:
step 401: configuring terminal equipment with indication information;
wherein the indication information is used to indicate that the terminal equipment is capable of performing cell selection once or more when connection reestablishment failure occurs during a connection reestablishment procedure;
in this embodiment, in establishing radio bearers for delay tolerance traffics of the terminal equipment, a network side, i.e. an eNB side to which the terminal equipment belongs before a failure (such as a radio link failure, a mobile handover failure, and an RRC link reconfiguration failure, etc.) occurs, may configure the terminal equipment which is performing the delay tolerance traffics and is in a connected state (such as an RRC-connected state) with the indication information;
step 402: notifying the indication information to the terminal equipment.

In this way, the terminal equipment is made to perform a cell selection procedure once or more when a connection reestablishment failure occurs, thereby avoiding the terminal equipment from being broken away from a connected state, and alleviating effect on the service quality of the terminal equipment and quality of experience of users.

In this embodiment, the method may further include: receiving information on whether the terminal equipment is willing to perform cell selection once or more transmitted by the terminal equipment. And when the received information fed back by the terminal equipment is information on that the terminal equipment is willing to perform cell selection once or more, the method may further include: keeping context of the terminal equipment within a predefined period of time; or executing step 401 when the received information is information on that the terminal equipment is willing to perform cell selection once or more, that is, configuring the terminal equipment with the indication information.

Furthermore, when mobile handover occurs in the terminal equipment, the method may further include: transmitting the configured indication information to a target eNB during a mobile handover procedure. For example, the indication information may be taken as a part of the context of the terminal equipment for transmitting to the target eNB, or may be transmitted separately to the target eNB. Furthermore, the information on whether the terminal equipment is willing to perform cell selection once or more transmitted by the terminal equipment may be transmitted to the target eNB.

It can be seen from the above embodiment that the network side may configure the terminal equipment with indication information, and the terminal equipment may perform a cell selection procedure once or more according to the indication information when a connection reestablishment failure occurs in the terminal equipment, thereby avoiding the terminal equipment from being broken away from a connected state, and alleviating effect on the service quality of the terminal equipment and quality of experience of users.

Fig. 5 is a flowchart of a connection failure recovery method of Embodiment 5 of the present invention, which is addressed to all cases of connection reestablishment failures, such as the cases of connection reestablishment failures listed in items 1) and 2) above in an RRC connection reestablishment procedure, which are at an eNB side of a selected cell in performing cell selection once or more by terminal equipment when a connection reestablishment failure occurs.

As shown in Fig. 5, the method includes:
step 501: receiving information on performing cell selection once or more, and/or number of times of performing cell selection, and/or identification information of a cell selected each time transmitted by terminal equipment, when a connection reestablishment failure occurs in the terminal equipment during a connection reestablishment procedure;
in this way, when a connection reestablishment failure occurs, the terminal equipment may perform a cell selection procedure once or more according to the predefined indication information; in such a case, the terminal equipment will report the information on performing cell selection once or more to a network side, i.e. an eNB of a selected cell; and the eNB of the selected cell may be an eNB when the failure occurs in the terminal equipment, and may also be other eNBs;
step 502: keeping context of the terminal equipment;
in this embodiment, after receiving the above information, the network side may keep the context of the terminal equipment (UE context) within a certain period of time;
step 503: performing performance optimization according to the received information on performing cell selection once or more;
for example, after receiving the information, the network side may apply the information to a performance optimizing mechanism related to an SON, such as in adjusting handover parameters.

In the above embodiment, steps 502 and 503 are not limited thereto, and may be executed at the same time or in a reverse order.

Embodiment 6 of the present invention further provides a connection failure recovery method, which is addressed to all cases of connection reestablishment failures, such as the cases of connection reestablishment failures listed in items 1) and 2) above in an RRC connection reestablishment procedure, which are at a target eNB side to which the terminal equipment is handed over from an eNB to which the terminal equipment belongs before a failure occurs.

The method includes: receiving, by the target eNB when the terminal equipment is handed over, indication information configured for the terminal equipment transmitted by an eNB of a cell to which the terminal equipment belongs, the indication information being used to indicate that the terminal equipment is capable of performing cell selection once or more when a connection reestablishment failure occurs in a connection reestablishment procedure. Thus, after receiving the indication information, the target eNB needs not to configure the terminal equipment with the indication information.

Furthermore, when the terminal equipment is handed over, the target eNB may receive information on whether the terminal equipment is willing to perform cell selection once or more transmitted by the eNB of the cell to which the terminal equipment belongs. Thus, the target eNB may, according to the information, judge whether it is needed to configure user equipment with the indication information.

Wherein, the eNB of the cell to which the terminal equipment belongs may be a source eNB.

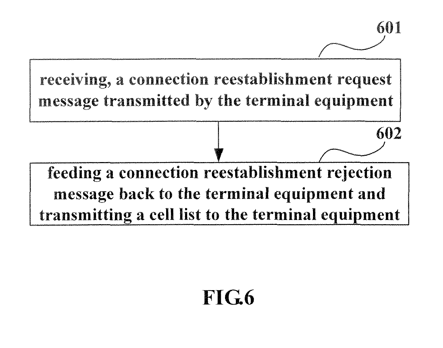

Fig. 6 is a flowchart of a connection failure recovery method of Embodiment 7 of the present invention. As shown in Fig. 6, the method includes:
step 601: receiving, by a target eNB to which terminal equipment tries to reestablish connection, a connection reestablishment request message transmitted by the terminal equipment;
for example, the target eNB may be an eNB to which the terminal equipment belongs before a failure occurs in the terminal equipment, and may also be other eNBs;
step 602: feeding a connection reestablishment rejection message back to the terminal equipment and transmitting a cell list to the terminal equipment; wherein the cell list includes cells that contain context of the terminal equipment and are under control of the target eNB of the connection reestablishment.

In this embodiment, the cell list may be contained in the connection reestablishment rejection message for being transmitted to the terminal equipment, and may also be separately transmitted to the terminal equipment via other messages. In this way, after obtaining the cell list, the terminal equipment may select a suitable cell from the cell list.

In this embodiment, the connection reestablishment rejection message may further contain a predefined period of time and/or a predefined number of times of performing cell selection once or more after the connection reestablishment fails; furthermore, the predefined period of time and/or the predefined number of times may also be notified to the terminal equipment via other messages.

Furthermore, in this embodiment, for further optimization, the cell list may further include cells that contain the context of the terminal equipment and are under control of other eNBs; in this way, the connection reestablishment rejection message contains all prepared cells (that is, an eNB controlling the cells possesses the context of the terminal equipment), so as to assist the terminal equipment in finding suitable cells and reestablishing connection successfully again.

In such a case, the method may further include: receiving information on cells that contain the context of the terminal equipment and are under control of other eNBs transmitted by the other eNBs; and the cell list further includes cells that contain the context of the terminal equipment and are under the control of the other eNBs.

It can be seen from the above embodiment that the network side may transmit the cell list to the terminal equipment after the connection reestablishment failure occurs in the terminal equipment; and the cell list may contain cells containing the context of the terminal equipment and under the control of the above target eNB and/or other eNBs; in this way, the terminal equipment obtaining the cell list may select a suitable cell from the cell list, thereby avoiding the terminal equipment from being broken away from a connected state, and alleviating effect on the service quality of the terminal equipment and quality of experience of users.

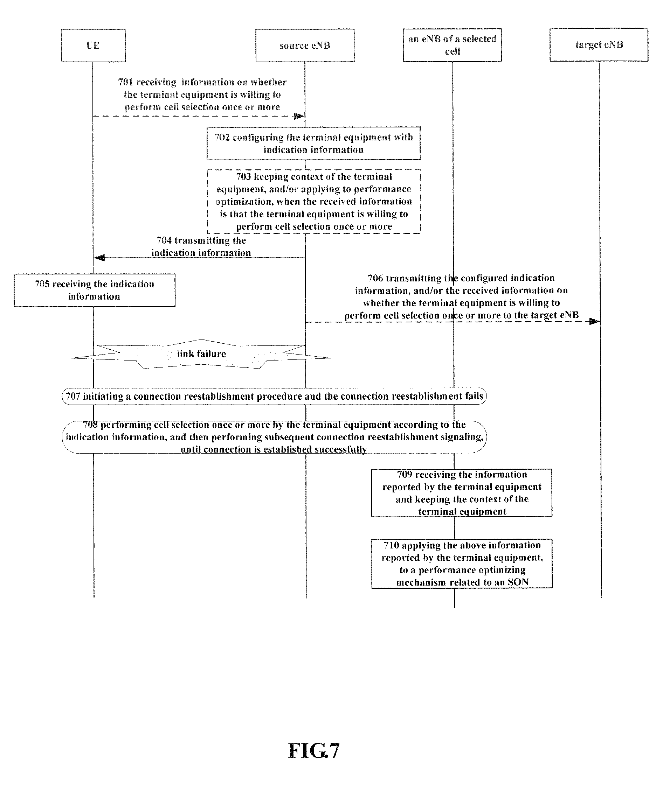

Fig. 7 is a flowchart of a connection failure recovery method of Embodiment 8 of the present invention, which is addressed to all cases of connection reestablishment failures, such as the cases of connection reestablishment failures listed in items 1) and 2) above in an RRC connection reestablishment procedure. Before a failure (such as a radio link failure, a mobile handover failure, and an RRC link reconfiguration failure, etc.) occurs, an eNB to which the terminal equipment belongs is a source eNB, and an eNB of a selected cell is an eNB of a cell selected in a cell selection procedure during a connection reestablishment procedure.

As shown in Fig. 7, the method includes:
step 701: receiving, by the network side, information on whether the terminal equipment is willing to perform cell selection once or more transmitted by the terminal equipment;
step 702: configuring the terminal equipment with indication information;
wherein the indication information is used to indicate that the terminal equipment is capable of performing cell selection once or more when a connection reestablishment failure occurs in the connection reestablishment procedure;
in this embodiment, when the terminal equipment performs delay tolerance traffics, an eNB to which the terminal equipment belongs (referred to as a source eNB herein) may configure the terminal equipment which is performing the delay tolerance traffics and in a connected state (such as an RRC-connected state) with the indication information;
step 703: keeping context of the terminal equipment, and/or applying to performance optimization related to an SON, when the received information transmitted by the terminal equipment is that the terminal equipment is willing to perform cell selection once or more;
wherein the source eNB may determine a period of time of keeping the context of the terminal equipment according to an actual situation;
step 704: notifying the indication information to the terminal equipment;
step 705: receiving the indication information by the terminal equipment;
step 706: transmitting, by the source eNB, the configured indication information, and/or the received information on whether the terminal equipment is willing to perform cell selection once or more to the target eNB in a mobile handover procedure;
for example, when mobile handover occurs in the terminal equipment, and it is handed over from the source eNB to the target eNB, the source eNB may take the indication information, and/or the information on whether the terminal equipment is willing to perform cell selection once or more, as a part of the context of the terminal equipment and transmit to the target eNB, or transmit separately to the target eNB; in this way, the target eNB needs not to configure the terminal equipment with the indication information;
in above steps 701-706, step 701 is optional;
steps 701 and 702 may be executed in any order, hence, the network side may configure all the terminal equipment performing delay traffics with the indication information;
furthermore, in order to save signaling overhead, in this embodiment, step 701 may be executed first, and then step 702 is executed; in this way, the network side will configure the terminal equipment with the indication information when the information on that the terminal equipment is willing to perform cell selection once or more is received;
step 703 is optional, steps 703 and 702 are interchangeable, and steps 704 and 703 are interchangeable;
step 706 is optional, and steps 703-706 be executed in any order;
in this embodiment, after a failure (such as a radio link failure, a mobile handover failure, and an RRC link reconfiguration failure, etc.) occurs, which is a link failure here for example, the terminal equipment in an RRC-connected state initiates a connection reestablishment procedure, so as to avoid it from being broken away from the RRC-connected state;
step 707: initiating a connection reestablishment procedure by the terminal equipment; and the connection reestablishment fails;
in this embodiment, a process of initiating connection reestablishment by the terminal equipment is as described in TS36.331 v11.1.0, which is incorporated herein, and shall not be described herein any further;
in an existing mechanism, the terminal equipment will break away from the RRC-connected state; however, such a case may be avoided in the embodiment of the present invention;
step 708: performing cell selection once or more by the terminal equipment according to the indication information, and then performing subsequent connection reestablishment signaling, until connection is established successfully;
in this embodiment, a process of executing step 708 is similar to those of executing steps 202-206 in Embodiment 2, which shall not be described herein any further;
wherein, in step 708, after performing cell selection once or more, the terminal equipment may report information on that cell selection is performed once or more, and/or number of times of performing cell selection, and/or identification information on a cell selected each time, to an eNB of the selected cell, for example, the information may be reported via an RRC reestablishment request message, or via other messages, to the eNB;
step 709: receiving by the eNB of the selected cell, the information reported by the terminal equipment, that is, cell selection is performed once or more, and/or number of times of performing cell selection, and/or identification information on a cell selected each time, and keeping the context of the terminal equipment (UE context);
the eNB of the selected cell keeps the context of the terminal equipment within a predefined period of time, and the predefined period of time may be determined by the eNB of the selected cell according to an actual situation;
step 710: applying, by the eNB of the selected cell, the above information reported by the terminal equipment, to a performance optimizing mechanism related to an SON; for example, the network side may adjust handover parameters according to the above information reported by the terminal equipment.

It can be seen from the above embodiment that when the connection reestablishment fails, the terminal equipment may perform a cell selection procedure once or more according to the indication information configured at the network side, thereby avoiding the terminal equipment from being broken away from a connected state, and alleviating effect on the service quality of the terminal equipment and quality of experience of users.

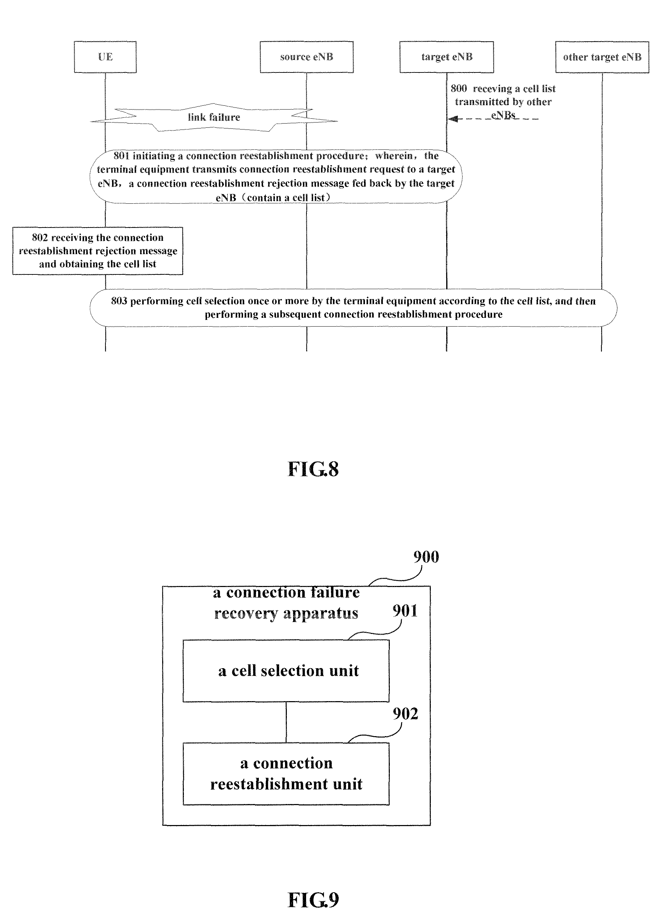

Fig. 8 is a flowchart of a connection failure recovery method of Embodiment 9 of the present invention. The description is given taking an RRC connection reestablishment and that a connection reestablishment failure is that a connection reestablishment request is rejected as an example. Wherein an eNB to which the terminal equipment belongs in transmitting a connection reestablishment request is a target eNB, an eNB to which the terminal equipment belongs before a failure occurs is referred to as a source eNB.

In this embodiment, after a failure (such as a radio link failure, a mobile handover failure, and an RRC link reconfiguration failure, etc.) occurs, which is a link failure here for example, the terminal equipment in an RRC-connected state initiates a connection reestablishment procedure, so as to avoid it from being broken away from the RRC-connected state;
Step 801: initiating a connection reestablishment procedure by the terminal equipment;
in this embodiment, a process of the RRC connection reestablishment procedure is as described in TS36.331 v11.1.0, which is incorporated herein, and shall not be described herein any further;
in the connection reestablishment procedure, the terminal equipment first performs the cell selection, after a suitable cell is selected, performs a signaling procedure of the RRC connection reestablishment request in the cell (such as performing random access, then transmitting a connection reestablishment request message to the target eNB by the terminal equipment, and receiving, by the terminal equipment, a connection reestablishment rejection message fed back by the target eNB according to the request message);
in this embodiment, the connection reestablishment rejection message may contain a cell list;
in this embodiment, the target eNB may be a source eNB, and may also be other eNBs, as shown in Fig. 8; in this embodiment, the target eNB is another eNB;
for example, the connection reestablishment rejection message is an RRC connection reestablishment rejection message;
in this embodiment, the connection reestablishment rejection message may further contain a cell list; wherein, the cell list contains cells containing the context of the terminal equipment and under control of the target eNB;
in this embodiment, the cell list is contained in the connection reestablishment rejection message and transmitted to the terminal equipment; however, it is not limited thereto, and the cell list may also be separately transmitted to the terminal equipment via other messages;
step 802: receiving the connection reestablishment rejection message by the terminal equipment and obtaining the cell list;
step 803: performing cell selection once or more by the terminal equipment according to the cell list, and then performing a subsequent connection reestablishment procedure in the selected cell;
in this embodiment, step 803 is similar to steps 303-307 in Embodiment 3, which shall not be described herein any further.
in this embodiment, the terminal equipment may select a suitable cell from the cell list, such as selecting another target eNB.

Furthermore, in this embodiment, for further optimization, the cell list may further include cells that contain the context of the terminal equipment and are under control of other eNBs; in this way, the connection reestablishment rejection message contains all prepared cells (that is, an eNB controlling the cells possesses the context of the terminal equipment), so as to assist the terminal equipment in finding suitable cells and reestablishing connection successfully again.

In such a case, the method may further include step 800: receiving, by the target eNB, information on cells that contain the context of the terminal equipment and are under control of other eNBs transmitted by the other eNBs; and the cell list further includes cells that contain the context of the terminal equipment and are under the control of the other eNBs; wherein step 800 is optional.

In this embodiment, the cell list may be exchanged between eNBs via an X2 message; wherein a complete list of prepared cells is exchanged between eNBs in the mobile handover procedure, the list containing all prepared cells in multiple selected target eNBs.

For example, in the handover procedure, the source eNB possibly transmits handover preparation messages to multiple target eNBs, each handover preparation message containing a list of prepared cells in an eNB receiving the message. Thereafter, each target eNB may transmit a list of prepared cells controlled by it to other eNBs (such as the source eNB or other target eNBs) via the X2 message; likewise, the source eNB (or a certain target eNB) may also transmit a complete list of prepared cells in all the target eNBs to the target eNB in the figure according to a collected list of prepared cells of other target eNBs; wherein the prepared cells refer to cells containing the context of the terminal equipment.

It can be seen from the above embodiment that the network side may prepare all the prepared cells in multiple candidate target eNBs for the terminal equipment; and when the connection reestablishment request of the terminal equipment is rejected, the terminal equipment may perform a cell selection procedure according to the cell list obtained from the network side, thereby avoiding the terminal equipment from being broken away from a connected state, and alleviating effect on the service quality of the terminal equipment and quality of experience of users.

It may be understood by an ordinary person in the art that all or part of the steps in the method described in the above embodiments may be carried out by related hardware instructed by a program. The program may be stored in a computer-readable storage medium. And when being executed, the program may include all or part of the steps in the method in the above embodiment, and the storage medium may include an ROM, an RAM, a floppy disc, and a compact disc, etc.

Embodiments of the present invention further provide a connection failure recovery apparatus, terminal equipment and an eNB, as described in the embodiments below. As the principles of the connection failure recovery apparatus, terminal equipment and eNB for solving problems are similar to that of the above method based on the connection failure recovery apparatus, terminal equipment and eNB, the implementation of the method may be referred to for the implementation of the connection failure recovery apparatus, terminal equipment and eNB, and the repeated parts shall not be described any further.

Fig. 9 is a schematic diagram of the structure of a connection failure recovery apparatus of Embodiment 10 of the present invention. At a terminal equipment side, as shown in Fig. 9, the apparatus 900 includes: a cell selection unit 901 configured to perform cell selection once or more when connection reestablishment failure occurs in terminal equipment during a connection reestablishment procedure. In this way the terminal equipment may be avoided from being broken away from a connected state, and effect on the service quality of the terminal equipment and quality of experience of users may be alleviated.

As shown in Fig. 9, the apparatus 900 may further include a connection reestablishment unit 902 configured to perform a connection reestablishment procedure in a selected cell after cell selection is completed each time.

An operational process of the apparatus 900 in this embodiment is as described in Embodiment 1, which shall not be described herein any further.

In this embodiment, in RRC connection establishment, the connection reestablishment failure includes: the selected cell becoming no longer suitable, or random access failure, or no suitable cell being selected within a specified time, or no connection reestablishment message being received within a specified time, or connection reestablishment failure resulted from rejection of a reestablishment request.

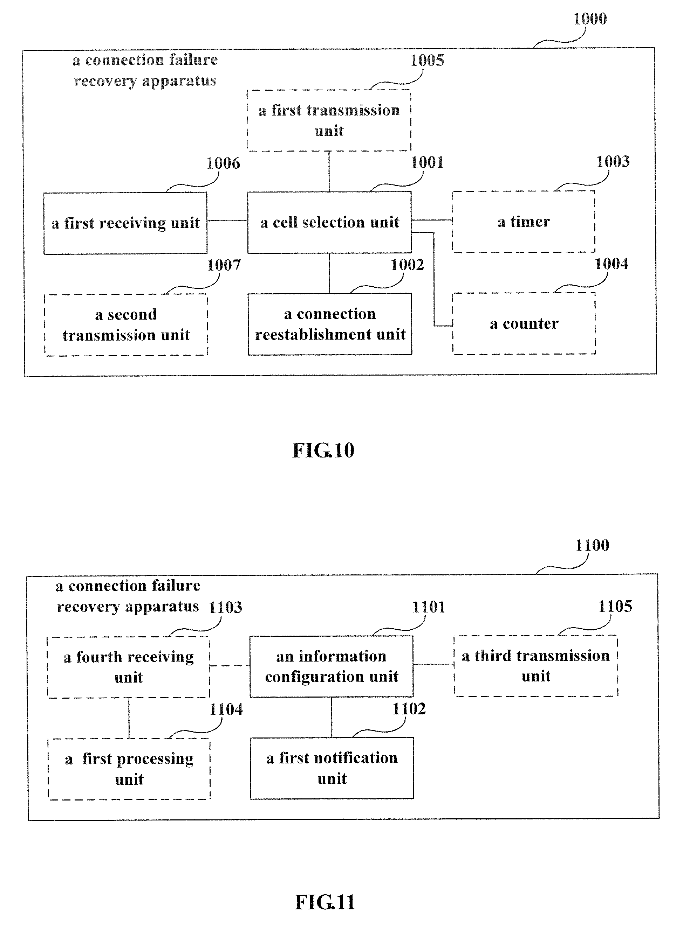

Fig. 10 is a schematic diagram of the structure of a connection failure recovery apparatus of Embodiment 11 of the present invention. Wherein the description is given taking that the terminal equipment performs cell selection according to indication information as an example, which is applicable to all cases where connection reestablishment fails.

As the terminal equipment side, as shown in Fig. 10, the apparatus 1000 includes a cell selection unit 1001 and a connection reestablishment unit 1002, with the functions of them being similar to those in Embodiment 10, which shall not be described herein any further.

As shown in Fig. 10, the apparatus 1000 further includes a first receiving unit 1006 configured to receive the indication information configured at the network side for the terminal equipment.

Wherein the network side is an eNB to which the terminal equipment belongs when a failure (such as a radio link failure, a mobile handover failure, and an RRC link reconfiguration failure, etc.) occurs; for example, an eNB in a mobile handover failure is a source eNB.

In this embodiment, the cell selection unit 1001 is configured to perform cell selection once or more according to indication information configured at a network side; wherein the indication information is used to indicate that the terminal equipment is capable of performing cell selection once or more.

In this embodiment, the indicating that the terminal equipment is capable of performing cell selection once or more refers to that the terminal equipment performs cell selection once or more within a predefined period of time, or performs a predefined number of times of cell selection.

Wherein the predefined period of time and/or the predefined number of times may be configured by the network side, or may also be configured by the terminal equipment.

In a case where it is configured by the terminal equipment, the apparatus 1000 may include a first configuring unit (not shown) configured to configure the predefined period of time and/or the predefined number of times.

In a case where it is configured by the network side, the apparatus 1000 may include a third receiving unit (not shown) configured to receive the predefined period of time and/or the predefined number of times configured at the network side. In such a case, the predefined period of time and/or the predefined number of times may be contained in the indication information, and may be transmitted via a separate message. The network side refers to an eNB to which the terminal equipment belongs before a failure occurs.

In the above case, the apparatus 1000 may further include a timer 1003 (not shown) configured to start timing when the connection reestablishment fails; and/or
the apparatus 1000 may further include a counter 1004 configured to start counting when the connection reestablishment fails.

In this embodiment, the apparatus 1000 further includes a first transmission unit 1005 configured to report that cell selection is performed once or more, and/or number of times of performing cell selection, and/or identification information of a cell selected each time, to an eNB of the selected cell, after the cell selection unit 1001 performs cell selection once or more.

As shown in Fig. 10, the apparatus 1000 further includes a second transmission unit 1007 configured to transmit information to the network side on whether the terminal equipment is willing to perform cell selection once or more. In this way, when the received information is on that the terminal equipment is willing to perform cell selection once or more, the network side keeps context of the terminal equipment within a predefined period of time.

An operational process of Embodiment 11 is as those described in embodiments 2 and 8, and shall not be described herein any further.

Embodiment 12 of the present invention further provides a connection failure recovery apparatus, of which the structure being similar to that of Embodiment 11 when the connection reestablishment failure is that a reestablishment request is rejected, and only the exceptional parts being described herein.

In this embodiment, the first receiving unit 1006 may be excluded.

In this embodiment, the cell selection unit is configured to perform cell selection once or more according to a received cell list; wherein the cell list contains cells containing the context of the terminal equipment and are under control of the target eNB of the connection reestablishment.

In this embodiment, the cell selection unit includes a second receiving unit and a selection unit (not shown); wherein the second receiving unit is configured to receive a cell list from a target eNB of the reestablishment connection; and wherein the cell list includes cells that contain context of the terminal equipment and are under control of the target eNB of the reestablishment connection, and the target eNB may transmit to the terminal equipment via a connection reestablishment rejection message; and the selection unit is configured to select a suitable cell from the cell list.

Furthermore, the cell list includes cells that contain the context of the terminal equipment and are under the control of other eNBs.

An operational process of Embodiment 12 is as those described in embodiments 3 and 9, and shall not be described herein any further.

Furthermore, the connection failure recovery apparatus may be a combination of embodiments of 11 and 12.

In this embodiment, as shown in Fig. 10, the first transmission unit 1005, the second transmission unit 1007, the timer 1003 or the counter 1004 are optional.

In the above embodiment, after the connection reestablishment failure, the terminal equipment may perform cell selection once or more according to the indication information configured at the network side or the cell list transmitted by the network side, thereby avoiding the terminal equipment from being broken away from a connected state, and alleviating effect on the service quality of the terminal equipment and quality of experience of users.

Embodiment 13 of the present invention further provides terminal equipment, which may be the apparatus as described in embodiments 10-12.

Fig. 11 is a connection failure recovery apparatus of Embodiment 14 of the present invention, which is at a source eNB side, i.e. an eNB side to which terminal equipment belongs when a failure occurs in the terminal equipment. As shown in Fig. 11, the apparatus 1100 includes an information configuration unit 1101 and a first notification unit 1102; wherein the information configuration unit 1101 is configured to configure terminal equipment with indication information, the indication information being used to indicate that the terminal equipment is capable of performing cell selection once or more when connection reestablishment failure occurs in the terminal equipment during a connection reestablishment procedure; and the first notification unit 1102 is configured to notify the indication information to the terminal equipment.

In this embodiment, the indication information may further contain a predefined period of time and/or a predefined number of times for performing cell selection.

Furthermore, the predefined period of time and/or the predefined number of times may be transmitted to the terminal equipment via other messages. In this case, the apparatus 1100 may further include a second notifying unit (not shown) configured to notify the predefined period of time and/or the predefined number of times to the terminal equipment.

As shown in Fig. 11, the apparatus 1100 further includes a fourth receiving unit 1103 configured to receive information on whether the terminal equipment is willing to perform cell selection once or more fed back by the terminal equipment.

As shown in Fig. 11, the apparatus 1100 further includes a first processing unit 1104 configured to keep context of the terminal equipment when the information received by the fourth receiving unit 1103 is on that the terminal equipment is willing to perform cell selection once or more.

In this embodiment, in order to save signaling overhead, the information configuration unit 1101 may configure the indication information after the fourth receiving unit 1103 receives the information on that the terminal equipment is willing to perform cell selection once or more.

As shown in Fig. 11, the apparatus 1100 further includes a third transmission unit 1105 configured to transmit the configured indication information and/or the received information on whether the terminal equipment is willing to perform cell selection once or more to a target eNB during a mobile handover procedure. In this way, the target eNB needs not to configure the indication information of the terminal equipment. Furthermore, the indication information and the information on whether the terminal equipment is willing to perform cell selection once or more may also be transmitted by different transmission units.

In this embodiment, the fourth receiving unit 1103, the first processing unit 1104 and the third transmission unit 1105 are optional, which shall not be described herein any further.

It can be seen from the above embodiment that the eNB to which the terminal equipment belongs before a failure occurs configures the terminal equipment with the indication information, so that the terminal equipment performs cell selection once or more according to the indication information when the connection reestablishment fails, thereby avoiding the terminal equipment from being broken away from a connected state, and alleviating effect on the service quality of the terminal equipment and quality of experience of users.

Embodiment 15 of the present invention further provides an eNB, including the apparatus as described in Embodiment 14. The eNB may be one to which terminal equipment belongs before a failure occurs.

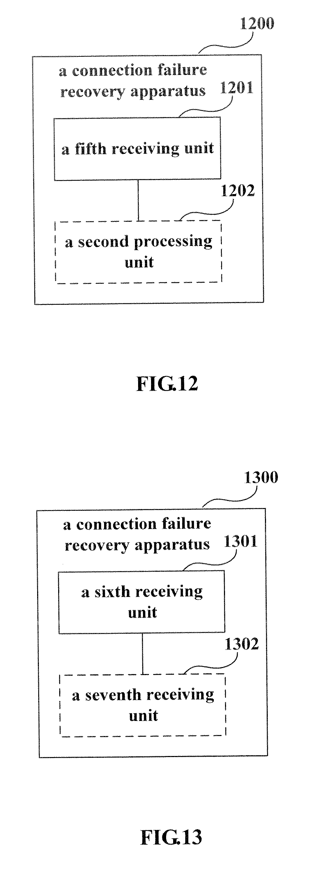

Fig. 12 is schematic diagram of the structure of a connection failure recovery apparatus of Embodiment 16 of the present invention, which is at an eNB side of a selected cell in performing cell selection by terminal equipment after a connection reestablishment failure occurs.

As shown in Fig. 12, the apparatus 1200 includes a fifth receiving unit 1201 configured to receive information on performing cell selection once or more by terminal equipment, and/or number of times of performing cell selection, and/or identification information of a cell selected each time, when connection reestablishment failure occurs in the terminal equipment during a connection reestablishment procedure.

In this embodiment, the apparatus may keep context of the terminal equipment within a predefined period of time according to the information, or apply the information to a performance optimization mechanism.

As shown in Fig. 12, the apparatus 1200 further includes a second processing unit 1202 configured to keep context of the terminal equipment, and/or perform performance optimization according to the received information on performing cell selection once or more.

Embodiment 17 of the present invention further provides an eNB, including the apparatus as described in Embodiment 16. When a connection reestablishment failure occurs in the terminal equipment, the terminal equipment performs cell selection once or more according to the indication information configured at the network side. At this moment, an eNB of a cell selected by the terminal equipment is the eNB of Embodiment 17 of the present invention.

Fig. 13 is a schematic diagram of the structure of a connection failure recovery apparatus of Embodiment 17 of the present invention, which is at a target eNB side when terminal equipment is handed over. As shown in Fig. 13, the apparatus 1300 includes:
a sixth receiving unit 1301 configured to receive indication information configured for terminal equipment and transmitted by an eNB of a cell to which the terminal equipment belongs when handover occurs in the terminal equipment, the indication information being used to indicate that the terminal equipment is capable of performing cell selection once or more when connection reestablishment failure occurs during a connection reestablishment procedure; furthermore, the sixth receiving unit 1301 is further configured to receive information on whether the terminal equipment is willing to perform cell selection once or more after a connection reestablishment failure transmitted by the eNB of the cell to which the terminal equipment belongs.

As shown in Fig. 13, the apparatus 1300 further includes a seventh receiving unit 1302 configured to receive a predefined period of time and/or a predefined number of times for performing cell selection once or more transmitted by an eNB of a cell to which the terminal equipment belongs.

Embodiment 19 of the present invention provides an eNB, including the apparatus as described in Embodiment 18. When a connection reestablishment failure, such as the connection reestablishment failure described in items 1) and 2) in the above embodiments, occurs in the terminal equipment, the terminal equipment receives indication information configured at a network side (such as an eNB to which the terminal equipment belongs before a failure occurs); when the terminal equipment is handed over from a source eNB (i.e. the eNB to which the terminal equipment belongs before the failure occurs) to a target eNB, the source eNB transmits the indication information to the target eNB; furthermore, information on whether the terminal equipment is willing to perform cell selection once or more after a connection failure may also be transmitted to the target eNB, or the predefined period of time and/or the predefined number of times may be transmitted to the target eNB. At this moment, the target eNB is the eNB of Embodiment 19 of the present invention.

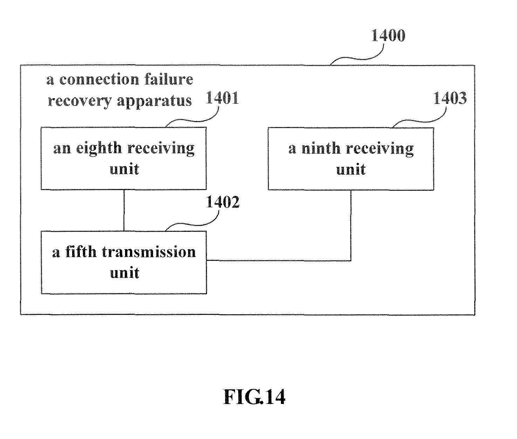

Fig. 14 is a schematic diagram of the structure of a connection failure recovery apparatus of Embodiment 20 of the present invention, which is at a target eNB side to which a connection reestablishment request is transmitted by terminal equipment. As shown in Fig. 14, the apparatus 1400 includes: an eighth receiving unit 1401 and a fifth transmission unit 1402; wherein, the eighth receiving unit 1401 is configured to receive a reestablishment request message transmitted by the terminal equipment, and the fifth transmission unit 1402 is configured to feed a connection reestablishment rejection message back to the terminal equipment and transmit a cell list to the terminal equipment; and wherein the cell list includes cells containing context of the terminal equipment and are under control of the target eNB of the connection reestablishment.

As shown in Fig. 14, the apparatus 1400 further includes a ninth receiving unit 1403 configured to receive information on cells that contain the context of the terminal equipment and are under control of other eNBs transmitted by the other eNBs;
and the cell list further includes cells that contain the context of the terminal equipment and are under the control of the other eNBs.

In this embodiment, the apparatus 1400 may further include a sixth transmission unit (not shown) configured to transmit a predefined period of time and/or a predefined number of times for performing cell selection to the terminal equipment.

Furthermore, the predefined period of time and/or the predefined number of times may also be contained in the reestablishment rejection message and transmitted by the fifth transmission unit 1402.

Embodiment 21 of the present invention further provides an eNB, including the apparatus as described in Embodiment 20. When a connection reestablishment failure, such as that a reestablishment request is rejected, occurs in the terminal equipment, the terminal equipment receives a cell list transmitted by a network side (such as a target eNB), and performs cell selection according to the cell list. At this moment, the target eNB is the eNB of Embodiment 21 of the present invention.

Embodiment 22 of the present invention further provides a network system, including the terminal equipment described in Embodiment 13. Furthermore, the system may include the eNB described in Embodiment 15, and/or the eNB described in Embodiment 17, and/or the eNB described in Embodiment 19, and/or the eNB described in Embodiment 21.

In this embodiment, an operation process of the network system may be as described in the embodiments shown in Figs. 8 and 9, and shall not be described herein any further.

An embodiment of the present invention further provides a computer-readable program, wherein when the program is executed in a connection failure recovery apparatus or terminal equipment, the program enables a computer to carry out the connection failure recovery method as described in embodiments 1-3 in the connection failure recovery apparatus or the terminal equipment.

An embodiment of the present invention further provides a storage medium in which a computer-readable program is stored, wherein the computer-readable program enables the computer to carry out the connection failure recovery method as described in embodiments 1-3, 8 and 9 in a connection failure recovery apparatus or terminal equipment.

An embodiment of the present invention further provides a computer-readable program, wherein when the program is executed in a connection failure recovery apparatus or an eNB, the program enables a computer to carry out the connection failure recovery method as described in embodiments 4-9 in the connection failure recovery apparatus or the eNB.

An embodiment of the present invention further provides a storage medium in which a computer-readable program is stored, wherein the computer-readable program enables a computer to carry out the connection failure recovery method as described in embodiments 4-9 in a connection failure recovery apparatus or an eNB.

It can be seen from the above embodiment that when a connection reestablishment procedure fails, the terminal equipment may perform cell selection once or more, thereby avoiding the terminal equipment from being broken away from a connected state, and alleviating effect on the service quality of the terminal equipment and quality of experience of users.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A connection failure recovery method, comprising:
performing cell selection once or more by terminal equipment when connection reestablishment failure occurs in the terminal equipment during a connection reestablishment procedure.

2. The method according to claim 1, wherein the method further comprises:
performing a subsequent connection reestablishment procedure in a selected cell after cell selection is completed each time.

3. The method according to claim 1 or 2, wherein the connection reestablishment failure comprises:
a selected cell becoming no longer suitable, or random access failure, or no suitable cell being selected within a specified time, or no connection reestablishment message being received within a specified time, or connection reestablishment failure resulted from rejection of a reestablishment request.

4. The method according to claim 1 or 2 or 3, wherein the terminal equipment performs cell selection once or more according to indication information configured at a network side;
and wherein the indication information is used to indicate that the terminal equipment is capable of performing cell selection once or more.

5. The method according to claim 4, wherein after the step of performing cell selection once or more, the method further comprises:
reporting that cell selection is performed once or more, and/or number of times of performing cell selection, and/or identification information on a cell selected each time, to an eNB of the selected cell.

6. The method according to claim 4, wherein the method further comprises:
receiving the indication information configured by the network side.

7. The method according to claim 5, wherein the method further comprises:
transmitting information to the network side on whether the terminal equipment is willing to perform cell selection once or more.

8. The method according to claim 3, wherein when the reestablishment request is rejected, the step of performing cell selection once or more by the terminal equipment comprises:
receiving a cell list from a target eNB of the reestablishment connection; wherein the cell list includes cells that contain context of the terminal equipment and are under control of the target eNB of the reestablishment connection; and
selecting a suitable cell from the cell list by the terminal equipment.

9. The method according to claim 8, wherein the cell list further includes cells that contain context of the terminal equipment and are under control of other eNBs.

10. The method according to claim 1 or 2 or 3, wherein the performing cell selection once or more by the terminal equipment refers to performing cell selection once or more by the terminal equipment within a predefined period of time, or performing a predefined number of times of cell selection by the terminal equipment.

11. The method according to claim 10, wherein when connection reestablishment failure occurs during the connection reestablishment procedure, a timer or a counter is started.

12. The method according to claim 10 or 11, wherein the method further comprises:
pre-configuring the predefined period of time and/or predefined number of times by the terminal equipment;
or the method further comprises: receiving the predefined period of time and/or predefined number of times configured at the network side.

13. A connection failure recovery method, comprising:
configuring terminal equipment with indication information, the indication information being used to indicate that the terminal equipment is capable of performing cell selection once or more when connection reestablishment failure occurs during a connection reestablishment procedure; and
notifying the indication information to the terminal equipment.

14. The method according to claim 13, wherein the method further comprises:
receiving information on whether the terminal equipment is willing to perform cell selection once or more transmitted by the terminal equipment; and
configuring the terminal equipment with the indication information and/or keeping context of the terminal equipment within a predefined period of time, when the received information transmitted by the terminal equipment is on that the terminal equipment is willing to perform cell selection once or more.

15. The method according to claim 13 or 14, wherein the method further comprises:
transmitting the configured indication information to a target eNB during a mobile handover procedure.

16. The method according to claim 14, wherein the method further comprises:
transmitting the received information on whether the terminal equipment is willing to perform cell selection once or more to a target eNB during a mobile handover procedure.

17. The method according to claim 13 or 14, wherein the method further comprises:
transmitting, to the terminal equipment, a predefined period of time and/or a predefined number of times for performing cell selection.

18. A connection failure recovery method, comprising:
receiving information on performing cell selection once or more transmitted by terminal equipment, and/or number of times of performing cell selection, and/or identification information of a cell selected each time, when connection reestablishment failure occurs in the terminal equipment during a connection reestablishment procedure.

19. The method according to claim 18, wherein the method further comprises:
keeping context of the terminal equipment, and/or performing performance optimization according to the received information on performing cell selection once or more.

20. A connection failure recovery method, comprising:
receiving indication information configured for terminal equipment and transmitted by an eNB of a cell to which the terminal equipment belongs, and/or information on whether the terminal equipment is willing to perform cell selection once or more in case of occurrence of connection reestablishment failure during a connection reestablishment procedure, when handover occurs in the terminal equipment, the indication information being used to indicate that the terminal equipment is capable of performing cell selection once or more when connection reestablishment failure occurs during a connection reestablishment procedure.

21. A connection failure recovery method, comprising:
receiving, by a target eNB to which terminal equipment tries to reestablish a connection, a reestablishment request message transmitted by the terminal equipment; and
feeding a connection reestablishment rejection message back to the terminal equipment and transmitting a cell list to the terminal equipment, so that the terminal equipment performs cell selection once or more according to the cell list; wherein the cell list includes cells that contain context of the terminal equipment and are under control of the target eNB of the connection reestablishment.

22. The method according to claim 21, wherein the method further comprises:
transmitting a predefined number of times and/or a predefined period of time for performing cell selection to the terminal equipment.

23. The method according to claim 21 or 22, wherein the method further comprises:
receiving information on cells that contain the context of the terminal equipment and are under control of other eNBs transmitted by the other eNBs;
and the cell list further includes cells that contain the context of the terminal equipment and are under the control of the other eNBs.

24. A connection failure recovery apparatus, comprising:
a cell selection unit configured to perform cell selection once or more when connection reestablishment failure occurs in terminal equipment during a connection reestablishment procedure.

25. The apparatus according to claim 24, wherein the apparatus further comprises:
a connection reestablishment unit configured to perform a subsequent connection reestablishment procedure in a selected cell after cell selection is completed each time.

26. The apparatus according to claim 24 or 25, wherein the connection reestablishment failure comprises:
a selected cell becoming no longer suitable, or random access failure, or no suitable cell being selected within a specified time, or no connection reestablishment message being received within a specified time, or connection reestablishment failure resulted from rejection of a reestablishment request.

27. The apparatus according to claim 24 or 25 or 26, wherein the cell selection unit is configured to perform cell selection once or more according to indication information configured at a network side;
and wherein the indication information is used to indicate that the terminal equipment is capable of performing cell selection once or more.

28. The apparatus according to claim 27, wherein the apparatus further comprises:
a first transmission unit configured to report that cell selection is performed once or more, and/or number of times of performing cell selection, and/or identification information of a cell selected each time, to an eNB of the selected cell.

29. The apparatus according to claim 27, wherein the apparatus further comprises:
a first receiving unit configured to receive the indication information configured at the network side.

30. The apparatus according to claim 29, wherein the apparatus further comprises:
a second transmission unit configured to transmit information to the network side on whether the terminal equipment is willing to perform cell selection once or more;
and the first receiving unit is configured to, when the information transmitted by the second transmission unit is on that the terminal equipment is willing to perform cell selection once or more, receive indication information configured by the network side for the terminal equipment according to the information.

31. The apparatus according to claim 26, wherein when the reestablishment request is rejected, the cell selection unit comprises:
a second receiving unit configured to receive a cell list from a target eNB of the reestablishment connection, wherein the cell list includes cells that contain context of the terminal equipment and are under control of the target eNB of the reestablishment connection; and
a selection unit configured to select a suitable cell from the cell list.

32. The apparatus according to claim 31, wherein the cell list further includes cells that contain the context of the terminal equipment and are under control of other eNBs.

33. The apparatus according to claim 24 or 25, wherein the cell selection unit performs cell selection once or more within a predefined period of time, or performs a predefined number of times of cell selection.

34. The apparatus according to claim 33, wherein the apparatus further comprises a timer configured to start timing when connection reestablishment failure occurs during the connection reestablishment procedure; and/or
the apparatus further comprises a counter configured to start counting when connection reestablishment failure occurs during the connection reestablishment procedure.

35. The apparatus according to claim 33 or 34, wherein the apparatus further comprises a first configuration unit configured to configure the predefined period of time and/or predefined number of times.

36. The apparatus according to claim 33 or 34, wherein the apparatus further comprises:
a third receiving unit configured to receive the predefined period of time and/or predefined number of times configured at the network side.

37. A connection failure recovery apparatus, comprising:
an information configuration unit configured to configure terminal equipment with indication information, the indication information being used to indicate that the terminal equipment is capable of performing cell selection once or more when connection reestablishment failure occurs in the terminal equipment during a connection reestablishment procedure; and
a first notification unit configured to notify the indication information to the terminal equipment.

38. The apparatus according to claim 37, wherein the apparatus further comprises:
a fourth receiving unit configured to receive information on whether the terminal equipment is willing to perform cell selection once or more transmitted by the terminal equipment; and
a first processing unit configured to keep context of the terminal equipment when the information received by the fourth receiving unit is on that the terminal equipment is willing to perform cell selection once or more;
or the second information configuration unit is configured to configure the terminal equipment with the indication information when the information received by the fourth receiving unit is on that the terminal equipment is willing to perform cell selection once or more.

39. The apparatus according to claim 37 or 38, wherein the apparatus further comprises:
a third transmission unit configured to transmit the configured indication information to a target eNB during a mobile handover procedure.

40. The apparatus according to claim 38, wherein the apparatus further comprises:
a fourth transmission unit configured to transmit the received information on whether the terminal equipment is willing to perform cell selection once or more to a target eNB during a mobile handover procedure.

41. The apparatus according to claim 37 or 38, wherein the apparatus further comprises:
a second notification unit configured to notify a predefined period of time and/or a predefined number of times for performing cell selection.

42. A connection failure recovery apparatus, comprising:
a fifth receiving unit configured to receive information on performing cell selection once or more by terminal equipment, and/or number of times of performing cell selection, and/or identification information of a cell selected each time, when connection reestablishment failure occurs in the terminal equipment during a connection reestablishment procedure.

43. The apparatus according to claim 42, wherein the apparatus further comprises:
a second processing unit configured to keep context of the terminal equipment, and/or perform performance optimization according to the received information on performing cell selection once or more.

44. A connection failure recovery apparatus, comprising:
a sixth receiving unit configured to receive indication information configured for terminal equipment and transmitted by an eNB of a cell to which the terminal equipment belongs, and/or information on whether the terminal equipment is willing to perform cell selection once or more in case of occurrence of connection reestablishment failure during a connection reestablishment procedure, when handover occurs in the terminal equipment, the indication information being used to indicate that the terminal equipment is capable of performing cell selection once or more when connection reestablishment failure occurs during a connection reestablishment procedure.

45. The apparatus according to claim 44, wherein the apparatus further comprises:
a seventh receiving unit configured to receive a predefined period of time and/or a predefined number of times for performing cell selection once or more transmitted by the eNB of the cell to which the terminal equipment belongs.

46. A connection failure recovery apparatus, comprising:
an eighth receiving unit configured to receive a reestablishment request message transmitted by terminal equipment; and
a fifth transmission unit configured to feed a connection reestablishment rejection message back to the terminal equipment and transmit a cell list to the terminal equipment, so that the terminal equipment performs cell selection once or more according to the cell list; wherein the cell list includes cells that contain context of the terminal equipment and are under control of the target eNB of the connection reestablishment.

47. The apparatus according to claim 46, wherein the apparatus further comprises:
a sixth transmission unit configured to transmit a predefined number of times and/or a predefined period of time for performing cell selection to the terminal equipment.

48. The apparatus according to claim 46 or 47, wherein the apparatus further comprises:
a ninth receiving unit configured to receive information on cells that contain the context of the terminal equipment and are under control of other eNBs transmitted by the other eNBs;
and the cell list further includes cells that contain the context of the terminal equipment and are under the control of the other eNBs.

49. Terminal equipment, comprising the apparatus as claimed in any one of claims 24-36.

50. An eNB, comprising the apparatus as claimed in any one of claims 37-41.

51. An eNB, comprising the apparatus as claimed in claim 42 or 43.

52. An eNB, comprising the apparatus as claimed in claim 44 or 45, or comprising the apparatus as claimed in any one of claims 46-48.

53. A network system, comprising the terminal equipment as claimed in claim 49.

54. The network system according to claim 53, further comprising the eNB as claimed in claim 50, and/or claim 51, and/or claim 52.

55. A computer-readable program, wherein when the program is executed in a connection failure recovery apparatus or terminal equipment, the program enables the computer to carry out the connection failure recovery method as claimed in any one of claims 1-12 in the connection failure recovery apparatus or the terminal equipment.

56. A storage medium in which a computer-readable program is stored, wherein the computer-readable program enables the computer to carry out the connection failure recovery method as claimed in any one of claims 1-12 in a connection failure recovery apparatus or terminal equipment.

57. A computer-readable program, wherein when the program is executed in a connection failure recovery apparatus or an eNB, the program enables the computer to carry out the connection failure recovery method as claimed in any one of claims 13-23 in the connection failure recovery apparatus or the eNB.

58. A storage medium in which a computer-readable program is stored, wherein the computer-readable program enables the computer to carry out the connection failure recovery method as claimed in any one of claims 13-23 in a connection failure recovery apparatus or an eNB.
